# EUROPÄISCHE PATENTSCHRIFT

(11) **EP 2 798 299 B1**
(45) Veröffentlichungstag und Bekanntmachung des Hinweises auf die Patenterteilung: **08.05.2019**
(21) Anmeldenummer: 12813869.0
(22) Anmeldetag: 21.12.2012
(51) Int. Cl.: F28D 1/03, F28D 1/04, F28D 20/02

(54) **WÄRMEÜBERTRAGER**
HEAT EXCHANGER
ÉCHANGEUR THERMIQUE

(30) Priorität: 30.12.2011 DE 102011090159
(43) Veröffentlichungstag der Anmeldung: 05.11.2014
(73) Patentinhaber: MAHLE Behr GmbH & Co. KG, 70469 Stuttgart (DE)
(72) Erfinder: SEEWALD, Wolfgang, 71732 Tamm (DE); VIEHRIG, Falk, 71069 Sindelfingen (DE); NEUMANN, Emil, 70439 Stuttgart (DE)
(74) Vertreter: Grauel, Andreas
(86) Internationale Anmeldenummer: PCT/EP2012/076855
(87) Internationale Veröffentlichungsnummer: WO 2013/098275

(56) Entgegenhaltungen:
- WO-A1-2010/150774
- FR-A1- 2 866 947
- FR-A1- 2 918 166
- JP-A- S62 293 086
- US-A- 3 292 690
- US-A1- 2006 266 501

## Beschreibung

### Technisches Gebiet

Die Erfindung betrifft einen Wärmeübertrager in Scheibenbauweise, insbesondere für Kraftfahrzeuge, mit einer Vielzahl von Scheibengruppen zur Bildung von ersten und zweiten und/oder dritten Strömungspfaden, wobei zwischen benachbarten Scheibengruppen ein Raumbereich für vierte Strömungspfade gebildet ist.

### Stand der Technik

Wärmeübertrager sind in Kraftfahrzeugen in einer hohen Vielzahl und zu verschiedensten Zwecken vorgesehen. So sind in Klimaanlagen Verdampfer verwendet, um durch Verdampfung des Kältemittels in Strömungspfaden im Verdampfer die durch Strömungspfade durch den Verdampfer strömende Luft abzukühlen, um damit eine Klimatisierung und Entfeuchtung im Kraftfahrzeuginnenraum zu bewirken. Dazu sind Verdampfer in Flachrohrbauweise oder in Scheibenbauweise bekannt geworden.

Bei Kraftfahrzeugen ist in jüngster Zeit der wesentliche Trend, dass der Kraftstoffverbrauch eines Kraftfahrzeuges und der damit einhergehende CO₂ Ausstoß zu reduzieren ist. Dies wird bei Kraftfahrzeugen mit Verbrennungsmotor auch dadurch erreicht, dass bei vorrübergehendem Stillstand, beispielsweise hervorgerufen durch ein Anhalten des Fahrzeuges an einer Ampel oder in vergleichbaren Situationen, der Verbrennungsmotor des Fahrzeuges abgeschaltet wird. Sobald das Fahrzeug durch Betätigung des Gaspedales oder des Kupplungspedales wieder zum Anfahren aktiviert wird, wird der Verbrennungsmotor automatisiert wieder eingeschaltet. Diese Technologie wird auch als Start-Stopp-Verfahren bezeichnet. Solche Start-Stopp-Verfahren sind in verbrauchsarmen Kraftfahrzeugen bereits umgesetzt worden. Für die marktüblichen Kraftfahrzeugklimaanlagen mit einem Kältekreislauf nach dem Kaltdampfprozess wird der Kompressor des Kältekreislaufes in der Regel über einen vom Kraftfahrzeugantriebsmotor angetriebenen Riementrieb angetrieben. Bei einem Motorstillstand ergibt sich daraus, dass die Klimaanlage dann bei stehendem Kompressorantrieb nicht mehr als kälteproduzierend arbeitend bezeichnet werden kann. Beim Abschalten des Motors im Start-Stopp-Betrieb kann somit die Klimatisierung des Kraftfahrzeuges nicht mehr arbeiten und Kälteleistung für die Abkühlung des Kraftfahrzeuginnenraums bereitstellen. Als Konsequenz dieser Situation erwärmt sich der Verdampfer der Klimaanlage relativ schnell und die durch den Verdampfer strömende Luft wird nur geringfügig bzw. zu wenig abgekühlt. Dies bewirkt zum einen, dass die Fahrzeuginnenraumtemperatur ansteigt und das Wohlbefinden der Fahrzeuginsassen beeinträchtigt wird.

Bei einer Kraftfahrzeugklimaanlage findet neben der Temperaturreduzierung auch ein Entfeuchtungsprozess statt, da die in der Luft vorhandene Luftfeuchtigkeit am Verdampfer kondensiert und aus dem Fahrzeug durch einen Kondensatauslass austritt. Die den Verdampfer durchströmende Luft wird somit entfeuchtet und tritt entfeuchtet in den Kraftfahrzeuginnenraum ein. Bei aktivem Start-Stopp-Betrieb bewirkt dies auch, dass die Entfeuchtung der in den Kraftfahrzeuginnenraum eintretenden Luft nicht mehr ausreichend gewährleistet werden kann, so dass die Luftfeuchtigkeit im Fahrzeuginnenraum im aktiven Start-Stopp-Betrieb steigt. Dies führt auch zu einem für die Fahrzeuginsassen als unangenehm und unkomfortabel empfundenen Luftfeuchtigkeitsanstieg.

Um diese temperatur- und luftfeuchtigkeitsansteigenden Prozesse zu vermeiden oder zu verlangsamen, wurde der sogenannte Speicher-Verdampfer entwickelt, welcher neben der eigentlichen Verdampferfunktion auch ein Kältespeichermedium umfasst, welches der den Verdampfer im aktivem Start-Stopp-Betrieb durchströmenden Luft Wärme entzieht und diese weiterhin abkühlt und entfeuchtet.

Diese Speicherverdampfer sind beispielsweise durch die DE 102006028017 bekannt geworden. Dabei besteht der in dieser Druckschrift offenbarte Speicherverdampfer aus zwei separaten Wärmeübertragerblöcken, dem Verdampfer und dem Speicherteil, die in unterschiedlichen Herstellungsprozessen hergestellt werden und erst kurz vor dem Lötprozess miteinander verbunden werden und anschließend gemeinsam zu einer Einheit verlötet werden. Dabei besteht der Hauptverdampfer aus zwei Flachrohrreihen, die in Luftrichtung hintereinander angeordnet sind und der Speicherteil diesen beiden Flachrohrreihen in Luftrichtung nachgeschaltet ist. Der Speicherteil besteht dabei aus Doppelrohrreihen, bei welchen zwei Rohre ineinander gesteckt werden, wobei im Innenraum des Innenrohres das Kältemittel durchströmt und im Zwischenraum zwischen Außenrohr und Innenrohr das Kältespeichermedium angeordnet ist. Der diesbezügliche Herstellungsprozess stellt sich als aufwendig und teuer dar, da viele verschiedene Teile aufeinander abgestimmt, gefügt und kalibriert werden müssen, um einen funktionstüchtigen Wärmeübertrager herstellen zu können. Insbesondere erweist sich das Doppelrohr mit verdeckten Rohreinführungen als relativ komplex, die Teilezahl ist sehr hoch bei gleichzeitig hoher Anzahl unterschiedlicher Teile und die Einhaltung der Toleranzen auf Grund der Vielzahl der Bauteile stellt sich als Risiko für die Prozessfähigkeit dar. Dies bedeutet im Umkehrschluss ein erhöhtes Risiko an Leckagen, so dass neben den Teilekosten auch die Ausschussraten dem Risiko der Erhöhung ausgesetzt sind.

Andere Wärmeübertrager in Scheibenbauweise sind durch die WO2010/150774 A1 und FR2866947 A1 bekannt geworden.

### Darstellung der Erfindung, Aufgabe, Lösung, Vorteile

Es ist die Aufgabe der Erfindung, einen Wärmeübertrager zu schaffen, welcher einfach herstellbar ist und geringere Kosten hervorruft als die im Stand der Technik bekannten Wärmeübertrager bei gleichzeitiger reduzierter Komplexität und reduzierter Ausschussrate.

Dies wird erreicht mit einem Wärmeübertrager mit den Merkmalen von Anspruch 1, wonach ein Wärmeübertrager geschaffen wird in Scheibenbauweise, insbesondere für Kraftfahrzeuge, mit einer Vielzahl von Scheibengruppen zur Bildung von ersten und zweiten und/oder dritten Strömungspfaden, wobei zwischen benachbarten Scheibengruppen ein Raumbereich für vierte Strömungspfade gebildet ist, die Scheibengruppen aus zumindest einem Scheibenpaar mit einer ersten und einer zweiten Scheibe besteht zur Bildung der ersten Strömungspfade und der zweiten Strömungspfade, wobei eine dritte Scheibe in Zusammenwirken mit einer der ersten oder einer der zweiten Scheiben zur Bildung des dritten Strömungspfads anordenbar ist. Durch die Scheibenbauweise wird die Notwendigkeit des Ineinandersteckens von Flachrohren vermieden, so dass der Herstellprozess dadurch vereinfacht wird. Mit dem erfindungsgemäßen Wärmeübertrager kann ein Wärmeübertrager für mehrere Fluide geschaffen werden, die an der Wärmeübertragung teilnehmen. So kann ein Wärmeübertrager geschaffen werden, der als Speicherverdampfer betrieben werden kann, wobei bei diesem Wärmeübertrager in dem ersten und in dem zweiten Strömungspfad Kältemittel strömt, in dem dritten Strömungspfad ein Kältespeichermedium vorgesehen ist und durch den vierten Strömungspfad die abzukühlende Luft strömt. Als alternatives Ausführungsbeispiel kann aber auch ein Heizkörper mit Heizspeicher vorgesehen sein, bei welchem in dem ersten und in dem zweiten Strömungspfad ein wärmetransportierendes Fluid, wie beispielsweise ein Kühlmittel des Verbrennungsmotors, strömt, in dem dritten Strömungspfad ein Wärmespeichermedium vorgesehen ist und durch den vierten Strömungspfad die zu erwärmende Luft strömt.

Erfindungsgemäß ist es zweckmäßig, wenn die Scheiben des Wärmeübertragers zumindest teilweise als Anschluss- und Verbindungsbereiche Öffnungen und/oder Näpfe aufweisen und zur Ausbildung von Strömungspfaden zwischen Anschlussbereichen kanalbildende Strukturen, wie Prägungen, aufweisen. Dies kann dann vorzugsweise durch Prägen oder Tiefziehen hergestellt werden, so dass aus der flachen Platine oder dem flachen Band sowohl die Näpfe gezogen werden als auch die kanalbildenden Strukturen geprägt oder gezogen werden. Auch können in diesem Prozess bzw. Werkzeug die Öffnungen gestanzt werden.

Gemäß der Erfindung weist die erste Scheibe der Scheibengruppe an zwei gegenüberliegenden Endbereichen jeweils zwei Anschlussbereiche als Einlass und/oder Auslass des ersten und des zweiten Strömungspfads auf und sind jeweils eine kanalbildende Struktur zwischen jeweils zwei Anschlussbereichen zur Ausbildung des ersten und des zweiten Strömungspfads vorgesehen, wobei an gegenüberliegenden Enden der ersten Scheibe weiterhin zwei Öffnungen und/oder Näpfe vorgesehen sind zur Verbindung mit dem dritten Strömungspfad. Die Scheibe ist, wenn sie etwa rechteckig ausgebildet ist, mit zwei kurzen und zwei langen Seiten versehen, wobei dann vorteilhaft die jeweiligen Anschlussbereiche der ersten Scheibe an den beiden gegenüberliegenden kurzen Seiten angeordnet sind. Dabei würden die Strömungspfade der ersten und zweiten als Strömungspfade ausgebildeten Strukturen dann etwa in Richtung der langen Seiten ausgerichtet sein. Dadurch kann ein relativ langer erster und zweiter Strömungspfad für das durchströmende Fluid, wie für das Kältemittel, erzeugt werden und ein kurzer vierter Strömungsweg für die Luft. Dies reduziert den Druckabfall der Luft und die Geräuschbildung der Luft im Verdampfer.

Gemäß der Erfindung weist die zweite Scheibe der Scheibengruppe an zwei gegenüberliegenden Endbereichen jeweils zwei Anschlussbereiche als Einlass und/oder Auslass des ersten und des zweiten Strömungspfads und eine kanalbildende Struktur zwischen zwei Anschlussbereichen zur Ausbildung des ersten oder des zweiten Strömungspfads auf, wobei an gegenüberliegenden Enden der ersten Scheibe weiterhin zwei Öffnungen und/oder Näpfe vorgesehen sind zur Verbindung mit dem dritten Strömungspfad.

Dabei ist es besonders vorteilhaft, wenn den zwei Anschlussbereichen des zweiten oder des ersten Strömungspfads keine kanalbildende Struktur oder eine vom Volumen abgeänderte oder reduzierte kanalbildende Struktur ausgebildet ist. Dies ist vorteilhaft, weil dann in diesem Bereich der dritte Strömungspfad angeordnet sein kann, ohne dass stark störende Einflüsse des ersten oder des zweiten Strömungspfads vorliegen.

Dabei ist es vorteilhaft, wenn mit der zweiten Scheibe eine dritte Scheibe derart verbunden ist, dass diese im Scheibenbereich ohne kanalbildende Struktur bzw. mit abgeänderter oder reduzierter kanalbildender Struktur angeordnet ist und den dritten Strömungspfad bildet und Öffnungen und/oder Näpfe aufweist, welche mit den Öffnungen und Näpfen des dritten Strömungspfads der zweiten Scheibe als Einlass oder Auslass kommunizieren. Dies ist vorteilhaft, weil dann in diesem Bereich der dritte Strömungspfad angeordnet sein kann, ohne dass störende Einflüsse des ersten oder des zweiten Strömungspfads vorliegen.

Vorteilhaft ist, wenn die Anschluss- und Verbindungsbereiche der drei Strömungspfade derart angeordnet sind, dass jeweils ein Anschluss- und Verbindungsbereich jedes Strömungspfads an einem gegenüberliegenden Ende der Scheibe bzw. der Scheibengruppe im Wesentlichen nebeneinander angeordnet sind.

Auch ist es vorteilhaft, wenn ein Anschluss- und Verbindungsbereich des dritten Strömungspfads zwischen Anschluss- und Verbindungsbereichen des ersten und zweiten Strömungspfads angeordnet ist. Dies erlaubt eine gleichmäßige Anordnung der Anschlüsse, weil der Anschluss des dritten Strömungskanals durchaus kleiner gehalten sein kann als der Anschluss der beiden anderen Strömungskanäle.

Alternativ ist es zweckmäßig, wenn ein Anschluss- und Verbindungsbereich des dritten Strömungspfads neben Anschluss- und Verbindungsbereichen des ersten und zweiten Strömungspfads angeordnet ist.

Weiterhin ist es vorteilhaft, wenn die als Näpfe ausgebildeten Anschluss- und Verbindungsbereiche und/oder die kanalbildenden Strukturen der ersten und/oder zweiten und/oder dritten Scheibe bezüglich des ersten und/oder zweiten und/oder dritten Strömungskanals in Richtung senkrecht zur Ebene der Scheibe jeweils gleich tief ausgebildet sind. Dies bewirkt, dass die Strömungskanäle in ihrer Tiefe an die Anforderungen anpassbar sind, so dass zum Beispiel die ersten und zweiten Strömungskanäle im Strömungsquerschnitt gleich gestaltbar sind.

Vorteilhaft ist es, wenn die als Näpfe ausgebildeten Anschluss- und Verbindungsbereiche und/oder die kanalbildenden Strukturen der ersten und/oder zweiten und/oder dritten Scheibe bezüglich des ersten und/oder zweiten und/oder dritten Strömungskanals in Richtung senkrecht zur Ebene der Scheibe derart ausgebildet sind, dass die Tiefe der kanalbildenden Strukturen der ersten Scheibe größer oder kleiner ist als die Tiefe der kanalbildenden Strukturen der zweiten und/oder dritten Scheibe bezüglich des zweiten und dritten Strömungspfads. Dies bewirkt, dass die Strömungskanäle in ihrer Tiefe an die Anforderungen anpassbar sind, so dass beispielsweise die ersten und zweiten Strömungskanäle im Strömungsquerschnitt größer gestaltbar sind als die dritten Strömungskanäle.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein erstes Ausführungsbeispiel eines erfindungsgemäßen Wärmeübertragers,
- Fig. 2: eine Ansicht einer Detailvergrößerung gemäß der Figur 1,
- Fig. 3: eine Ansicht einer Scheibenanordnung eines Wärmeübertragers,
- Fig. 4: eine Ansicht einer Scheibenanordnung eines Wärmeübertragers,
- Fig. 5: eine Ansicht einer Scheibenanordnung eines Wärmeübertragers,
- Fig. 6: eine Ansicht einer Scheibenanordnung eines Wärmeübertragers,
- Fig. 7: eine Ansicht einer Scheibenanordnung eines Wärmeübertragers,
- Fig, 8: eine Ansicht einer Scheibenanordnung eines Wärmeübertragers,
- Fig. 9: eine Ansicht einer Scheibenanordnung eines Wärmeübertragers,
- Fig. 10: eine Ansicht einer Scheibenanordnung eines Wärmeübertragers,
- Fig. 11: eine Ansicht einer Scheibenanordnung eines Wärmeübertragers in einer Schnittdarstellung,
- Fig. 12: eine Ansicht einer Scheibenanordnung eines Wärmeübertragers in einer Schnittdarstellung,
- Fig. 13: eine Ansicht einer Scheibenanordnung eines Wärmeübertragers in einer Schnittdarstellung,
- Fig. 14: eine Ansicht einer Scheibenanordnung eines Wärmeübertragers in einer Schnittdarstellung,
- Fig. 15: eine Ansicht einer Scheibenanordnung eines Wärmeübertragers in einer Schnittdarstellung, und
- Fig. 16: eine Ansicht einer Scheibenanordnung eines Wärmeübertragers in einer Schnittdarstellung.

### Bevorzugte Ausführung der Erfindung

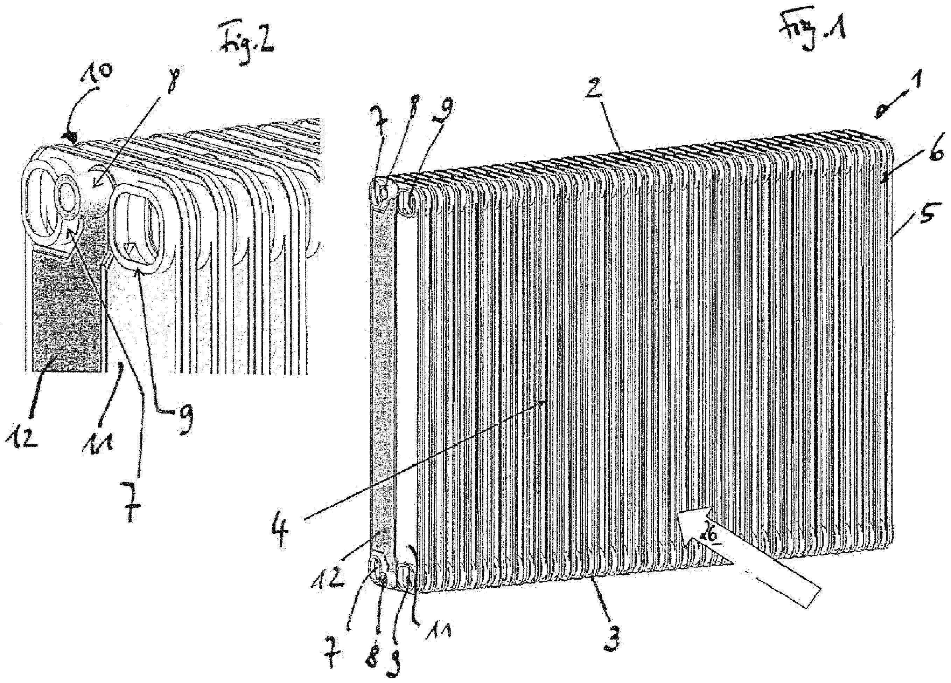

Die Figur 1 zeigt einen Wärmeübertrager 1 mit einem ersten oberen Sammler 2 und einem zweiten unteren Sammler 3, die an zwei gegenüberliegenden Enden des Wärmeübertragers angeordnet sind und sich in einer Querrichtung erstrecken und mit einem Block 4, bei welchem das Netz des Blocks aus Scheiben gebildet ist, die zu Scheibengruppen zusammengefügt sind, wobei eine Vielzahl von Scheibengruppen 5 nebeneinander angeordnet sind, um das Netz des Wärmeübertragers auszubilden. Zwischen jeweils zwei benachbarten Scheibengruppen 5 sind Raumbereiche 6 vorgesehen, welche zur Durchströmung beispielsweise von Luft durch den Wärmeübertrager dienen. Die Luftrichtung ist durch den Pfeil 26 angedeutet. In den genannten Raumbereichen können auch Rippen, wie beispielsweise Wellrippen, vorgesehen sein, um den Wärmeübergang zu verbessern.

Wie zu erkennen ist, besteht der obere und auch der untere Sammler aus im Wesentlichen drei Strömungskanälen, welche durch die drei Anschlussstutzen 7, 8, 9 angedeutet werden. Diese Strömungskanäle des Sammlers erstrecken sich in Querrichtung an der oberen Seite und an der unteren Seite des Wärmeübertragers. Zwischen den Sammlern sind Strömungskanäle vorgesehen, welche sich in erste, zweite und dritte Strömungskanäle 10,11,12 unterteilen. Die Strömungskanäle 12 sind zwischen den gegenüberliegenden Anschlussbereichen 8 ausgebildet, die Strömungskanäle 11 sind zwischen den gegenüberliegenden Anschlussbereichen 9 ausgebildet, und die Strömungskanäle 10 sind zwischen den gegenüberliegenden Anschlussbereichen 7 ausgebildet.

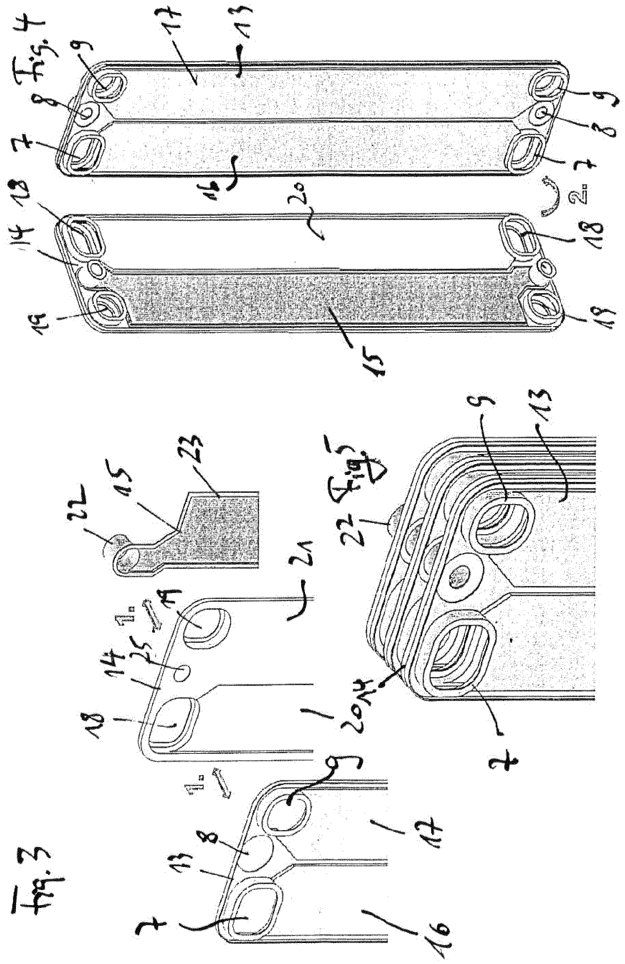

Wie in Figur 3 zu erkennen ist, besteht eine Scheibengruppe aus einer ersten Scheibe 13, aus einer zweiten Scheibe 14 und einer dritten Scheibe 15. Die erste Scheibe 13, auch in Figur 4 zu erkennen, weist an ihrer oberen Schmalseite drei Anschluss- und Verbindungsbereiche 7, 8, 9 auf, wobei diese Anschluss- und Verbindungsbereiche auch an der unteren gegenüberliegenden Schmalseite der Scheibe 13 angeordnet sind. Dabei sind die Anschluss- und Verbindungsbereiche 7 und 9 als Näpfe ausgebildet, die aus der Ebene der Scheibe in senkrecht dazu ausgerichteter Richtung hervorstehen. Die Anschluss- und Verbindungsbereiche 8 können vorteilhaft ebenso als Näpfe ausgebildet sein, sie können jedoch auch, wie in Figur 3 bzw. in Figur 4 zu erkennen ist, als Öffnung ohne Näpfe ausgestaltet sein.

Zwischen den Anschluss- und Verbindungsbereichen 7 bzw. 9 an dem jeweils oberen und unteren Endbereich einer Scheibe sind kanalbildende Strukturen 16, 17 vorgesehen, welche die als Näpfe ausgebildeten Anschluss- und Verbindungsbereiche jeweils mit einem Strömungskanal verbinden. Dabei bildet die kanalbildende Struktur 16 einen ersten Strömungskanal und die kanalbildende Struktur 17 einen zweiten Strömungskanal. Wie zu erkennen ist, weist die zweite Scheibe 14 ebenfalls am oberen und unteren Endbereich der kurzen Seiten zwei Näpfe 18,19 auf, wobei weiterhin eine Öffnung 25 zur Durchströmung eines dritten Mediums durch einen dritten Strömungskanal vorgesehen ist. Die Anschluss- und Verbindungsbereiche 18 der zweiten Scheibe 14 sind wiederum mittels einer kanalbildenden Struktur 20 miteinander verbunden. Die kanalbildende Struktur 20 wirkt zusammen mit der kanalbildenden Struktur 16 bei miteinander verbundenen ersten und zweiten Scheiben 13,14 zusammen, um einen ersten Strömungskanal zu bilden. Werden die beiden Scheiben 13 und 14 miteinander verbunden, so entsteht ein erster Strömungskanal, welcher gebildet wird durch die kanalbildenden Strukturen 16 und 20, und es wird ein zweiter Strömungskanal gebildet, welcher gebildet wird durch die kanalbildende Struktur 17. Daraus ergibt sich, dass bei Verbindung der beiden Scheiben 13,14 der erste Strömungskanal eine größere Tiefe senkrecht zur Scheibenebene aufweist als der zweite Strömungskanal. Der erste Strömungskanal wird also gebildet durch die kanalbildenden Strukturen, wie Prägungen 16 und 20, wobei der zweite Strömungskanal gebildet wird alleine durch die kanalbildende Struktur 17, da in der zweiten Scheibe zwischen den Näpfen 19 keine kanalbildende Struktur vorgesehen ist. Die kanalbildenden Strukturen sind vorzugsweise Prägungen in der Scheibe, die zu Ausbuchtungen und damit zu Kanälen führen.

Weiterhin ist zu erkennen, dass auf die zweite Scheibe 14 eine weitere Scheibe 15 aufgelegt und mit dieser abgedichtet verbunden wird. Dabei bildet die Scheibe 15 mit der Scheibe 14 in ihrem flachen Bereich den Strömungskanal 17, da der Strömungskanal 17 zwischen dem oberen Anschluss und dem unteren Anschluss 22 ausgebildet ist und die Scheibe 15 auf dem ebenen Bereich 21 angeordnet ist, welcher auf der zweiten Scheibe 14 vorgesehen ist. Der Anschlussbereich 22 der Scheibe 15, der beispielsweise als Napf oder Durchzug ausgebildet ist, ist derart angeordnet, dass er mit der Öffnung 25 und der Öffnung 8 der ersten bzw. zweiten Scheibe etwa in horizontaler Richtung fluchtet.

Wie zu erkennen ist, weist die erste Scheibe 13 und die zweite Scheibe 14 einen hervorstehenden umlaufenden Rand auf, mittels welchem die beiden Scheiben miteinander dichtend verlötet werden können. Auch die Scheibe 15 weist einen umlaufenden Rand 23 auf, mittels welchem die Scheibe 15 auf dem ebenen Bereich 21 der Scheibe 14 verlötet werden kann.

Die Figur 3 zeigt, wie die erste Scheibe 13, die zweite Scheibe 14 und die dritte Scheibe 15 relativ zueinander angeordnet werden können und auch miteinander verbunden werden können.

Die Figur 4 zeigt eine Scheibengruppe bestehend aus erster, zweiter und dritter Scheibe 13,14,15, die miteinander verbunden sind, wobei die linke Bildhälfte die Scheibengruppe von der Seite der zweiten und dritten Scheibe 14,15 zeigt, während die rechte Bildhälfte die Scheibengruppe von der ersten Scheibe 13 aus betrachtet werden kann.

Die Figur 5 zeigt die Aneinanderreihung dreier Scheibengruppen, die aus ersten, zweiten und dritten Scheiben 13,14,15 bestehen, wobei die Frontansicht jeweils der ersten Scheibe 13 entspricht und sich daran anschließend die Scheibe 14 anordnet, und von der Scheibe 15 lediglich der Napf 22 als Durchzug zu erkennen ist.

Die Figur 5 zeigt die Anordnung der Verbindung der Näpfe der Scheiben 13 und 14, die aufeinander gelötet von dem Scheibenpaar 13,14 abstehen, wobei benachbarte Scheibenpaare 13,14 mit diesen Näpfen aneinander grenzend fluiddicht verlötet sind. Zwischen den Näpfen 7 und 9 sind die Anschlussnäpfe 22 angeordnet, wobei diese in axialer Richtung tiefer ausgebildet sind als die Näpfe 7,9 der ersten Scheibe und 18,19 der zweiten Scheibe, weil die erste Scheibe im Bereich des Durchgangs 8 keinen Napf aufweist. Daher muss der Napf 22 der dritten Scheibe im Wesentlichen die Summe der Tiefen der Näpfe 7 und 18 bzw. 9 und 19 aufweisen.

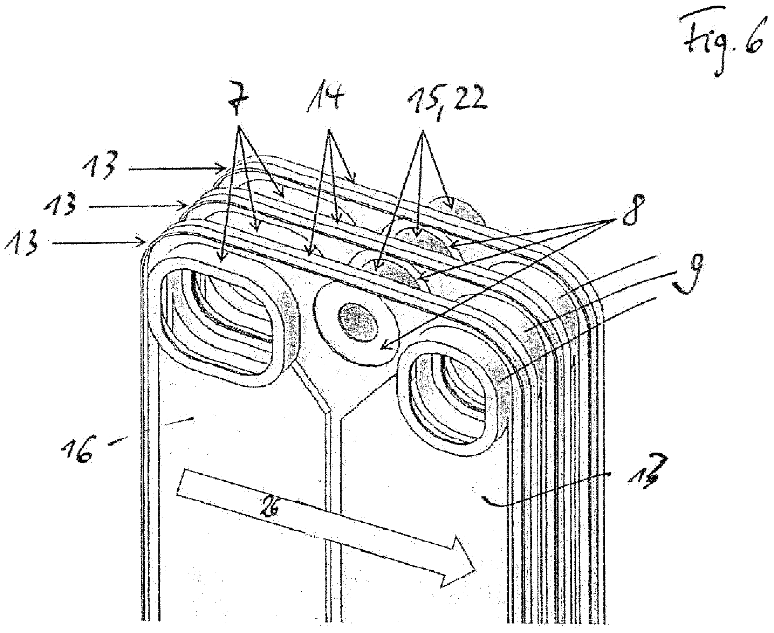

Die Figur 6 zeigt die Anordnung dreier Scheibengruppen bestehend aus ersten Scheiben 13, zweiten Scheiben 14 und dritten Scheiben 15, wobei von den dritten Scheiben 15 jeweils nur die Durchzüge 22 zu erkennen sind.

Die beiden ersten und zweiten Scheiben 13,14 liegen mit ihren umlaufenden Rändern aneinander an. Die Durchzüge 7,9 der ersten Scheibe sind nach vorne ausgeprägt, wobei die Durchzüge 22 der dritten Scheibe nach hinten stehend geprägt sind. Dazwischen liegen die nach hinten ragenden Durchzüge bzw. Näpfe der zweiten Scheibe 14, die in dieser Perspektivenansicht jedoch nicht zu erkennen sind. Es ist jedoch deutlich, dass die Durchzüge bzw. Näpfe 22 doppelt so hoch sind wie die Kältemittelnäpfe. Die Figur 4 zeigt, dass die nach hinten ragenden Näpfe 22 der dritten Scheibe 15 etwa doppelt so hoch sind wie die Näpfe der ersten und zweiten Scheibe 13,14.

Auch ist zu erkennen, dass die kanalbildenden Strukturen der ersten Scheibe 13,16 ausgehend von den Näpfen 7,9 sich auf etwa die halbe Breite der ersten Scheibe erweitern und im Bereich der Öffnung 8 der ersten Scheibe eine zwickelartige Aussparung aufweisen, so dass in diesem Bereich die Verlötung der ersten Scheibe 13 mit dem Napf der dritten Scheibe 15 vorgesehen werden kann.

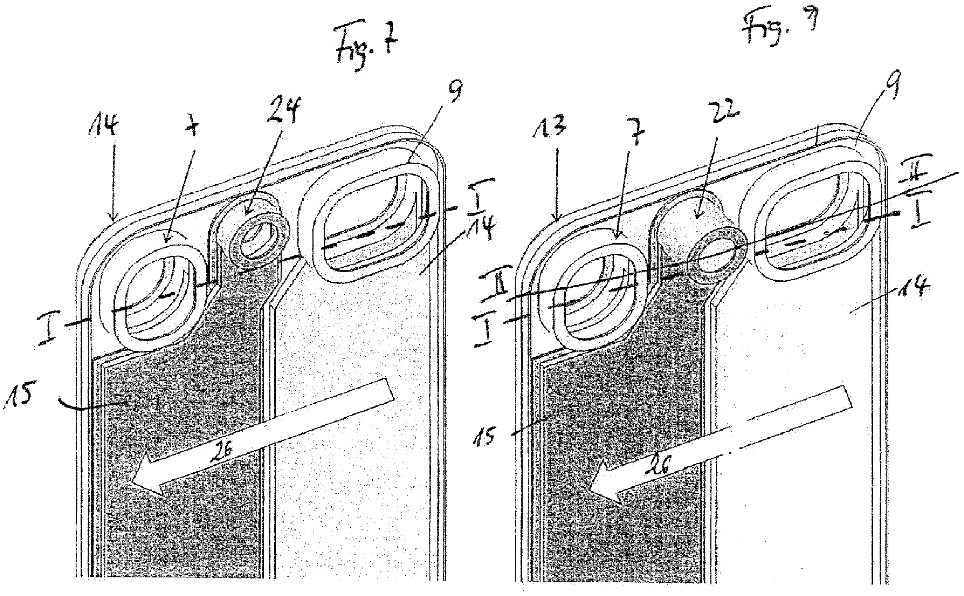

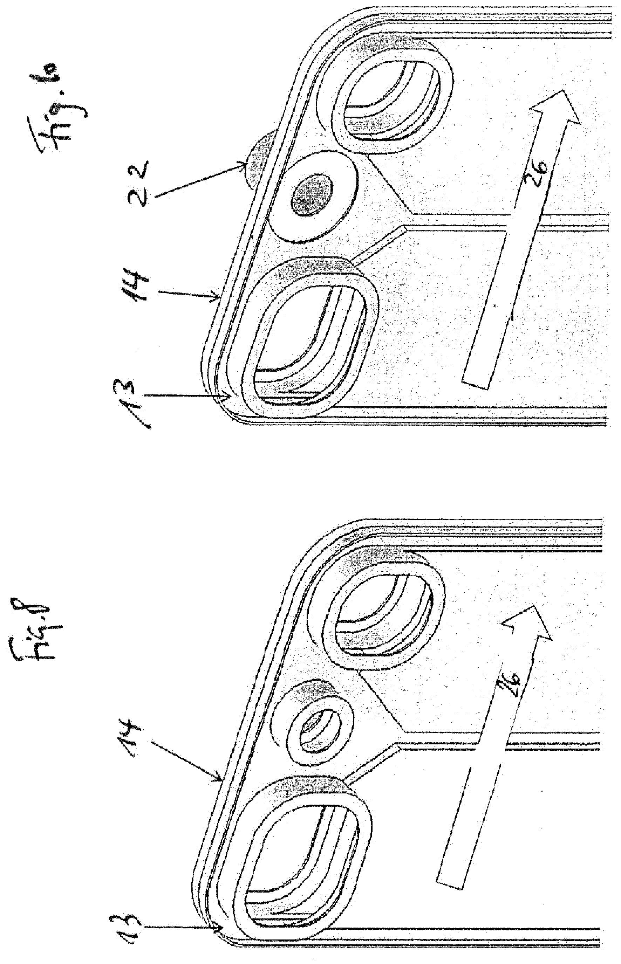

Die Figuren 7 bis 10 zeigen die Gestaltung der ersten, zweiten bzw. dritten Scheiben 13,14,15 in zwei unterschiedlichen Ausführungsvarianten, wobei in den Figuren 7 und 8 die Näpfe der ersten, zweiten und dritten Scheibe 13,14,15 gleich tief bzw. lang sind, und bei dem Ausführungsbeispiel der Figuren 9 und 10 der Napf 22 der dritten Scheibe 15 doppelt so tief ist wie die Näpfe 7,9 der ersten und der zweiten Scheibe 13,14, wobei die erste Scheibe im Bereich des Anschlusses der dritten Scheibe keinen Napf aufweist. Hierzu sind die Näpfe 7,9 gleich tief wie der Napf 24 der dritten Scheibe 15. In der Figur 9 ist zu erkennen, dass der Napf 7 und der Napf 9 etwa nur die halbe Tiefe des Napfes 22 der dritten Scheibe 15 aufweisen.

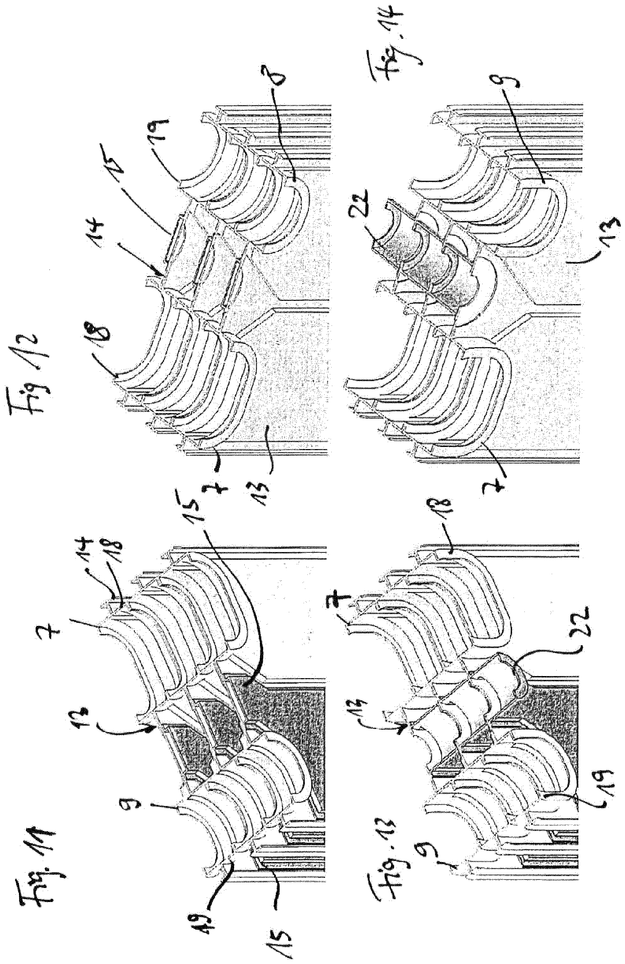

Die Figuren 11 bis 14 zeigen Schnitte durch Scheibengruppen, wobei die Figuren 11 und 12 einen Schnitt durch eine Scheibengruppe zeigen, der in Figur 7 bzw. 9 etwa in der Mitte der Näpfe 7, 9 entlang der Linie I - I erfolgt, wobei dieser Schnitt unterhalb des Napfes 22 bzw. 24 vorgenommen ist.

Die Figur 11 zeigt die Anordnung dreier Scheibengruppen bestehend aus einer ersten Scheibe 13, einer zweiten Scheibe 14 und einer dritten Scheibe 15 von der Seite, von der die zweite Scheibe und die dritte Scheibe zu erkennen sind. Dabei sind drei solcher Scheibengruppen durch Anlage der Näpfe der Scheiben aneinander dargestellt. Es ist zu erkennen, dass die Näpfe 7,9 der ersten Scheibe im Wesentlichen die gleiche Tiefe aufweisen wie die Näpfe 18,19 der zweiten Scheibe. Der Napf der dritten Scheibe ist nicht zu erkennen. Hier ist lediglich ein Bereich der kanalbildenden Struktur 15 der dritten Scheibe zu erkennen.

Die Figur 12 zeigt die gleiche Konfiguration der Scheiben 13,14,15 wie Figur 11, jedoch lediglich von der anderen Seite, so dass man in Figur 12 quasi auf die erste Scheibe 13 blickt. Die Figuren 13 und 14 zeigen einen Schnitt durch eine Scheibenanordnung gemäß Figur 9 jedoch auf Höhe der Mitte des Durchzuges 22 gemäß der Linie II - II.

Dieser Schnitt erfolgt etwas weiter oben im Vergleich zum Schnitt der Linie I - I, so dass nun die drei Scheibengruppen mittig des Napfes 22 geschnitten und dargestellt sind. Deutlich zu erkennen ist, dass der Napf 22 eine doppelte Tiefe aufweist im Vergleich zu den Näpfen 19 bzw. 9 bzw. 7 und 18. Dies bewirkt, dass auf der dem Napf 22 gegenüberliegenden Seite der Scheibe 13 kein Napf angeordnet ist, so dass das entfernte Ende des Napfes 22 auf der gegenüberliegenden Seite mit der ersten Scheibe 13 direkt ohne Zwischenschaltung eines diesbezüglichen Napfes in Berührung gelangt.

Das Fehlen des Napfes auf Seiten der ersten Scheibe 13 ist in Figur 14 deutlich zu erkennen.

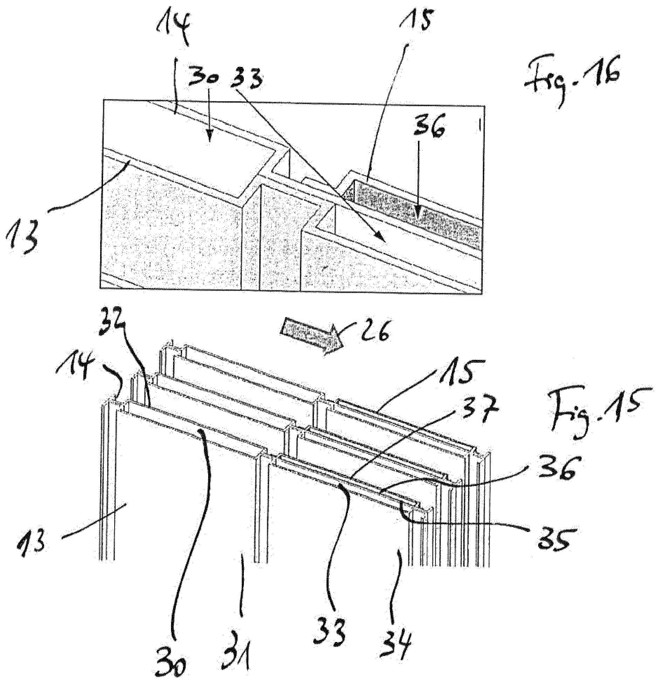

Die Figuren 15 und 16 zeigen einen Schnitt durch die Anordnung der Scheibengruppen gemäß Figur 6, wobei die Scheibengruppen mittig der Scheiben geschnitten sind. Die Figur 6 zeigt einen Ausschnitt der Figur 5 hinsichtlich eines Bereiches in der Mitte einer Scheibengruppe.

Die Figur 15 zeigt die Scheibengruppe von der Seite der ersten Scheibe 13, die auf der Rückseite mit der Scheibe 14 versehen ist und auf deren rechter Seite wiederum eine Scheibe 15 aufgebracht ist. Der erste Strömungspfad 30 wird gebildet zwischen der kanalartigen Struktur 31 der Scheibe 13 sowie der kanalartigen Struktur 32 der Scheibe 14. Der zweite Strömungspfad 33 wird gebildet durch die kanalartige Struktur 34 der Scheibe 13 und der ebenen Scheibenfläche 35 der zweiten Scheibe. Die zweite Scheibe ist in diesem Bereich bevorzugt eben, sie kann jedoch auch eine gewisse Struktur einnehmen.

Der dritte Strömungspfad 36 wird gebildet durch die Umwandung 35 der zweiten Scheibe und die kanalartige Struktur 37 der dritten Scheibe 15.

Wie in Figur 16 zu erkennen ist, ist der erste Strömungspfad 30 zwischen der ersten und der zweiten Scheibe angeordnet. Benachbart dazu ist der zweite Strömungspfad 33 ebenfalls zwischen der ersten und der zweiten Scheibe angeordnet, wobei der dritte Strömungspfad 36 zwischen der zweiten Scheibe und der dritten Scheibe angeordnet ist. Die Ausdehnung des ersten Strömungspfades entspricht im Wesentlichen der Ausdehnung des zweiten Strömungspfades plus der Ausdehnung des dritten Strömungspfades zuzüglich der Dicke der Wandung der zweiten Scheibe.

Im vorliegenden Ausführungsbeispiel der Figuren 9 und 10 mit dem verlängerten Durchzug 22 der Scheibe 15 ist zu erkennen, dass der Ausschnitt 99 in der Scheibe 13 größer ist als der Durchmesser des Durchzugs 22, so dass bei einer Verlötung von zwei Scheibengruppen 13,14,15 aufeinander der Durchzug 22 nicht mit der Scheibe 13 in Berührung kommt, sondern mit der Scheibe 14, auf welche die Scheibe 15 von der anderen Seite verlötet ist. Dadurch wird erreicht, dass bei einer Leckage zwischen den verlöteten Scheiben im Bereich des Durchzugs 22 diese nur zwischen dem Kanal zwischen den Scheiben 14 und 15 und dem Außenraum auftritt, wobei die anderen Kanäle dadurch nicht involviert und beeinträchtigt werden.

### Bezugszeichenliste

- 1: Wärmeübertrager
- 2: oberer Sammler
- 3: unterer Sammler
- 4: Block
- 5: Scheibengruppe
- 6: Raumbereich
- 7: Anschlussstutzen, Anschlussbereich
- 8: Anschlussstutzen, Anschlussbereich
- 9: Anschlussstutzen, Anschlussbereich
- 10: Strömungskanal
- 11: Strömungskanal
- 12: Strömungskanal
- 13: erste Scheibe
- 14: zweite Scheibe
- 15: dritte Scheibe
- 16: kanalbildende Struktur
- 17: kanalbildende Struktur
- 18: Anschlussstutzen, Anschlussbereich, Napf
- 19: Anschlussstutzen, Anschlussbereich, Napf
- 20: kanalbildende Struktur
- 25: Öffnung
- 21: ebener Bereich
- 22: Anschlussbereich, Napf
- 23: umlaufender Rand
- 24: Napf
- 25: Öffnung
- 26: Pfeil, Luftrichtung
- 30: Strömungspfad
- 31: kanalbildende Struktur
- 32: kanalbildende Struktur
- 33: Strömungspfad
- 34: kanalbildende Struktur
- 35: ebene Scheibenfläche
- 36: Strömungspfad
- 37: kanalbildende Struktur
- 99: Durchmesser der Öffnung

## Patentansprüche

1. Wärmeübertrager (1) in Scheibenbauweise, insbesondere für Kraftfahrzeuge, mit einer Vielzahl von Scheibengruppen (5) zur Bildung von ersten und zweiten und dritten Strömungspfaden (30, 33, 36), wobei zwischen benachbarten Scheibengruppen (5) ein Raumbereich für vierte Strömungspfade gebildet ist, die Scheibengruppen (5) aus zumindest einem Scheibenpaar mit einer ersten (13) und einer zweiten Scheibe (14) bestehen zur Bildung der ersten Strömungspfade und der zweiten Strömungspfade (30, 33), wobei eine dritte Scheibe (15) in Zusammenwirken mit der zweiten Scheibe (14) zur Bildung des dritten Strömungspfads (36) angeordnet ist, wobei die ersten (13) und die zweiten Scheiben (14) miteinander verbunden sind zur Bildung des ersten und des zweiten Strömungspfads (30, 33) und die dritten Scheiben (15) auf die zweiten Scheiben (14) aufgelegt sind zur Bildung des dritten Strömungspfads (36), wobei die erste Scheibe (13) der Scheibengruppe (5) an zwei gegenüberliegenden Endbereichen jeweils zwei Anschlussbereiche (7, 9, 18, 19) aufweist als Einlass und/oder Auslass des ersten und des zweiten Strömungspfads (30, 33) und jeweils eine kanalbildende Struktur (16, 17) zwischen jeweils zwei Anschlussbereichen an gegenüberliegenden Endbereichen zur Ausbildung des ersten und des zweiten Strömungspfads (30, 33), wobei an gegenüberliegenden Enden der ersten Scheibe weiterhin zwei Öffnungen (8) und/oder Näpfe vorgesehen sind zur Verbindung mit dem dritten Strömungspfad, und wobei die zweite Scheibe (14) der Scheibengruppe (5) an zwei gegenüberliegenden Endbereichen jeweils zwei Anschlussbereiche (7, 9, 18, 19) aufweist als Einlass und/oder Auslass des ersten und des zweiten Strömungspfads (30, 33) und eine kanalbildende Struktur (20) zwischen zwei Anschlussbereichen an gegenüberliegenden Endbereichen zur Ausbildung des ersten oder des zweiten Strömungspfads (30, 33), wobei an gegenüberliegenden Enden der zweiten Scheibe (14) weiterhin zwei Öffnungen (25) und/oder Näpfe vorgesehen sind zur Verbindung mit dem dritten Strömungspfad (36).

2. Wärmeübertrager nach Anspruch 1, **dadurch gekennzeichnet, dass** die Scheiben als Anschluss- und Verbindungsbereiche Öffnungen und/oder Näpfe (18, 19) aufweisen und zur Ausbildung von Strömungspfaden zwischen Anschlussbereichen kanalbildende Strukturen (16, 17, 20) als Prägungen aufweisen.

3. Wärmeübertrager (1) nach Anspruch 1 oder 2, **dadurch gekennzeichnet, dass** zwischen den zwei Anschlussbereichen des zweiten oder des ersten Strömungspfads (33, 36) der zweiten Scheibe (14) der Scheibengruppe (5) keine kanalbildende Struktur oder eine vom Volumen abgeänderte oder reduzierte kanalbildende Struktur ausgebildet ist.

4. Wärmeübertrager (1) nach Anspruch 3, **dadurch gekennzeichnet, dass** mit der zweiten Scheibe (14) die dritte Scheibe (15) derart verbunden ist, dass diese im Scheibenbereich ohne kanalbildende Struktur bzw. mit abgeänderter oder reduzierter kanalbildender Struktur angeordnet ist und den dritten Strömungspfad (36) bildet und Öffnungen und/oder Näpfe aufweist, welche mit den Öffnungen und Näpfen des dritten Strömungspfads (36) der zweiten Scheibe (14) als Einlass oder Auslass kommunizieren.

5. Wärmeübertrager (1) nach einem der vorhergehenden Ansprüche, **dadurch gekennzeichnet, dass** die Anschluss- und Verbindungsbereiche der drei Strömungspfade (30, 33, 36) derart angeordnet sind, dass jeweils ein Anschluss- und Verbindungsbereich jedes Strömungspfads (30, 33, 36) an einem gegenüberliegenden Ende der Scheibe bzw. der Scheibengruppe im Wesentlichen nebeneinander angeordnet sind.

6. Wärmeübertrager (1) nach einem der vorhergehenden Ansprüche, **dadurch gekennzeichnet, dass** ein Anschluss- und Verbindungsbereich des dritten Strömungspfads (36) zwischen Anschluss- und Verbindungsbereichen des ersten und zweiten Strömungspfads (30, 33) angeordnet ist.

7. Wärmeübertrager (1) nach einem der vorhergehenden Ansprüche, **dadurch gekennzeichnet, dass** ein Anschluss- und Verbindungsbereich des dritten Strömungspfads (36) neben Anschluss- und Verbindungsbereichen des ersten und zweiten Strömungspfads (30, 33) angeordnet ist.

8. Wärmeübertrager (1) nach einem der vorhergehenden Ansprüche, **dadurch gekennzeichnet, dass** die als Näpfe ausgebildeten Anschluss- und Verbindungsbereiche und/oder die kanalbildenden Strukturen der ersten und/oder zweiten und/oder dritten Scheibe (13, 14, 15) bezüglich des ersten und/oder zweiten und/oder dritten Strömungskanals (30, 33, 36) in Richtung senkrecht zur Ebene der Scheibe (13, 14, 15) jeweils gleich tief ausgebildet sind.

9. Wärmeübertrager (1) nach einem der vorhergehenden Ansprüche, **dadurch gekennzeichnet, dass** die als Näpfe ausgebildeten Anschluss- und Verbindungsbereiche und/oder die kanalbildenden Strukturen der ersten und/oder zweiten und/oder dritten Scheibe (13, 14, 15) bezüglich des ersten und/oder zweiten und/oder dritten Strömungskanals (30, 33, 36) in Richtung senkrecht zur Ebene der Scheibe (13, 14, 15) derart ausgebildet sind, dass die Tiefe der kanalbildenden Strukturen der ersten Scheibe (13) größer oder kleiner ist als die Tiefe der kanalbildenden Strukturen der zweiten und/oder dritten Scheibe (14, 15) bezüglich des zweiten und dritten Strömungspfads (33, 36).

## Claims

1. A plate-type heat exchanger (1), particularly for motor vehicles, with a plurality of plate groups (5) to form first and second and third flow paths (30, 33, 36), wherein a spatial region for fourth flow paths is formed between adjacent plate groups (5), wherein the plate groups (5) consist of at least one plate pair having a first (13) and a second plate (14) to form the first flow paths and the second flow paths (30, 33), wherein a third plate (15) is arranged in conjunction with the second plate (14) in order to form the third flow path (36), wherein the first (13) and the second plates (14) are connected to one another to form the first and the second flow path (30, 33) and the third plates (15) are placed onto the second plates (14) to form the third flow path (36), wherein the first plate (13) of the plate group (5) at two opposite end regions has in each case two connecting regions (7, 9, 18, 19) as an inlet and/or outlet of the first and second flow path (30, 33) and in each case a channel-forming structure (16, 17) between two connecting regions at opposite end regions in each case to form the first and second flow path (30, 33), wherein further two openings (8) and/or cups are provided at opposite ends of the first plate for connection to the third flow path, and wherein the second plate (14) of the plate group (5) at two opposite end regions has two connecting regions (7, 9, 18, 19) in each case as an inlet and/or outlet of the first and second flow path (30, 33) and a channel-forming structure (20) between two connecting regions at two opposite end regions to form the first or second flow path (30, 33), wherein further two openings (25) and/or cups are provided at opposite ends of the second plate (14) for connection to the third flow path (36).

2. The heat exchanger according to claim 1, **characterised in that** the plates have openings and/or cups (18, 19) as connecting and interconnecting regions and have channel-forming structures (16, 17, 20) as embossings to form flow paths between connecting regions.

3. The heat exchanger (1) according to claim 1 or 2, **characterised in that** no channel-forming structure or a volume-modified or reduced channel-forming structure is formed between the two connecting regions of the second or first flow path (33, 36) of the second plate (14) of the plate group (5).

4. The heat exchanger (1) according to claim 3, **characterised in that** the third plate (15) is connected to the second plate (14) such that it is arranged in the plate region without a channel-forming structure or with a modified or reduced channel-forming structure and forms the third flow path (36) and has openings and/or cups which communicate with the openings and cups of the third flow path (36) of the second plate (14) as an inlet or outlet.

5. The heat exchanger (1) according to one of the preceding claims, **characterised in that** the connecting and interconnecting regions of the three flow paths (30, 33, 36) are arranged such that in each case a connecting and interconnecting region of each flow path (30, 33, 36) is arranged substantially next to one another at an opposite end of the plate or the plate group.

6. The heat exchanger (1) according to one of the preceding claims, **characterised in that** a connecting and interconnecting region of the third flow path (36) is arranged between connecting and interconnecting regions of the first and second flow path (30, 33).

7. The heat exchanger (1) according to one of the preceding claims, **characterised in that** a connecting and interconnecting region of the third flow path (36) is arranged next to connecting and interconnecting regions of the first and second flow path (30, 33).

8. The heat exchanger (1) according to one of the preceding claims, **characterised in that** the connecting and interconnecting regions, formed as cups, and/or the channel-forming structures of the first and/or second and/or third plate (13, 14, 15) are in each case made equally deep relative to the first and/or second and/or third flow channel (30, 33, 36) in the direction perpendicular to the plane of the plate (13, 14, 15).

9. The heat exchanger (1) according to one of the preceding claims, **characterised in that** the connecting and interconnecting regions, formed as cups, and/or the channel-forming structures of the first and/or second and/or third plate (13, 14, 15) relative to the first and/or second and/or third flow channel (30, 33, 36) are formed in the direction perpendicular to the plane of the plate (13, 14, 15) such that the depth of the channel-forming structures of the first plate (13) is greater or smaller than the depth of the channel-forming structures of the second and/or third plate (14, 15) relative to the second and third flow path (33, 36).

## Revendications

1. Echangeur de chaleur (1) du type à plaques, en particulier pour des véhicules automobiles, ledit échangeur de chaleur comprenant une multiplicité de groupes de plaques (5) servant à la formation de premiers, de deuxièmes et de troisièmes trajets d'écoulement (30, 33, 36), où une zone d'espace pour des quatrièmes trajets d'écoulement est formée entre des groupes de plaques adjacents (5), les groupes de plaques (5) se composant au moins d'une paire de plaques comprenant une première plaque (13) et une deuxième plaque (14), lesdits groupes de plaques servant à la formation des premiers trajets d'écoulement et des deuxièmes trajets d'écoulement (30, 33), où une troisième plaque (15), agissant de façon conjointe avec la deuxième plaque (14), est disposée pour la formation du troisième trajet d'écoulement (36), où les premières plaques (13) et les deuxièmes plaques (14) sont reliées les unes aux autres pour la formation du premier et du deuxième trajet d'écoulement (30, 33), et les troisièmes plaques (15) sont posées sur les deuxièmes plaques (14) pour la formation du troisième trajet d'écoulement (36), où la première plaque (13) du groupe de plaques (5) présente à chaque fois, au niveau de deux zones d'extrémités opposées, deux zones de raccordement (7, 9, 18, 19) servant d'entrée et / ou de sortie du premier et du deuxième trajet d'écoulement (30, 33), et présente à chaque fois, pour la formation du premier et du deuxième trajet d'écoulement (30, 33), une structure (16, 17) formant des conduits entre respectivement deux zones de raccordement situées au niveau de zones d'extrémités opposées, où, au niveau d'extrémités opposées de la première plaque, il est prévu en outre deux ouvertures (8) et / ou des godets servant à la communication avec le troisième trajet d'écoulement, et où la deuxième plaque (14) du groupe de plaques (5) présente à chaque fois, au niveau de deux zones d'extrémités opposées, deux zones de raccordement (7, 9, 18, 19) servant d'entrée et / ou de sortie du premier et du deuxième trajet d'écoulement (30, 33), et présente, pour la formation du premier ou du deuxième trajet d'écoulement (30, 33), une structure (20) formant des conduits entre deux zones de raccordement situées au niveau de zones d'extrémités opposées, où, au niveau d'extrémités opposées de la deuxième plaque (14), il est prévu en outre deux ouvertures (25) et / ou des godets servant à établir la communication avec le troisième trajet d'écoulement (36).

2. Echangeur de chaleur selon la revendication 1, **caractérisé en ce que** les plaques présentent des ouvertures et / ou des godets (18, 19) servant de zones de raccordement et / ou de communication, et présentent, pour la formation de trajets d'écoulement, des structures (16, 17, 20) formant des conduits entre des zones de raccordement, lesdites structures étant comme des parties matricées en creux.

3. Echangeur de chaleur (1) selon la revendication 1 ou 2, **caractérisé en ce que**, entre les deux zones de raccordement du deuxième ou du premier trajet d'écoulement (33, 36) de la deuxième plaque (14) du groupe de plaques (5), aucune structure formant des conduits n'est formée, ou bien une structure formant des conduits est formée en étant modifiée ou réduite en fonction du volume.

4. Echangeur de chaleur (1) selon la revendication 3, **caractérisé en ce que** la troisième plaque (15) est reliée à la deuxième plaque (14) de manière telle, que ladite troisième plaque soit disposée, dans la zone de plaques, sans structure formant des conduits ou bien en ayant une structure - modifiée ou réduite - formant des conduits, et forme le troisième trajet d'écoulement (36) et présente des ouvertures et / ou des godets qui communiquent, comme entrée ou sortie, avec les ouvertures et les godets du troisième trajet d'écoulement (36) de la deuxième plaque (14).

5. Echangeur de chaleur (1) selon l'une quelconque des revendications précédentes, **caractérisé en ce que** les zones de raccordement et de communication des trois trajets d'écoulement (30, 33, 36) sont disposées de manière telle, qu'une zone de raccordement et de communication de chaque trajet d'écoulement (30, 33, 36) située au niveau d'une extrémité opposée de la plaque ou du groupe de plaques soit disposée à chaque fois en étant pratiquement l'une à côté de l'autre.

6. Echangeur de chaleur (1) selon l'une quelconque des revendications précédentes, **caractérisé en ce qu'**une zone de raccordement et de communication du troisième trajet d'écoulement (36) est disposée entre des zones de raccordement et de communication du premier et du deuxième trajet d'écoulement (30, 33).

7. Echangeur de chaleur (1) selon l'une quelconque des revendications précédentes, **caractérisé en ce qu'**une zone de raccordement et de communication du troisième trajet d'écoulement (36) est disposée à proximité de zones de raccordement et de communication du premier et du deuxième trajet d'écoulement (30, 33).

8. Echangeur de chaleur (1) selon l'une quelconque des revendications précédentes, **caractérisé en ce que** les zones de raccordement et de communication configurées comme des godets et / ou les structures - formant des conduits - de la première et / ou de la deuxième et / ou de la troisième plaque (13, 14, 15) concernant le premier et / ou le deuxième et / ou le troisième conduit d'écoulement (30, 33, 36) sont configurées en ayant à chaque fois une même profondeur suivant une direction perpendiculaire au plan de la plaque (13, 14, 15).

9. Echangeur de chaleur (1) selon l'une quelconque des revendications précédentes, **caractérisé en ce que** les zones de raccordement et de communication configurées comme des godets et / ou les structures - formant des conduits - de la première et / ou de la deuxième et / ou de la troisième plaque (13, 14, 15) concernant le premier et / ou le deuxième et / ou le troisième conduit d'écoulement (30, 33, 36) sont configurées suivant une direction perpendiculaire au plan de la plaque (13, 14, 15), de manière telle que la profondeur des structures - formant des conduits - de la première plaque (13) est supérieure ou inférieure à la profondeur des structures - formant des conduits - de la deuxième et / ou de la troisième plaque (14, 15) concernant le deuxième et le troisième trajet d'écoulement (33, 36).
